# FASCICULE DE BREVET EUROPEEN

(11) **EP 3 855 060 B1**
(45) Date de publication et mention de la délivrance du brevet: **23.08.2023**
(21) Numéro de dépôt: 21305077.6
(22) Date de dépôt: 22.01.2021
(51) Int. Cl.: F16L 55/18, E21B 7/20, F16L 1/06, F16L 55/16

(54) **DISPOSITIF POUR AIDER AU REMPLACEMENT D'UNE CONDUITE**
HILFSVORRICHTUNG ZUM AUSWECHSELN EINER ROHRLEITUNG
DEVICE FOR ASSISTING WITH REPLACEMENT OF A PIPE

(30) Priorité: 23.01.2020 FR 2000624
(43) Date de publication de la demande: 28.07.2021
(73) Titulaire: GRDF, 75009 Paris (FR)
(72) Inventeur: DUPAS, Guillaume, 60250 MOUY (FR)
(74) Mandataire: IP Trust

(56) Documents cités:
- DE-U1-202005 004 940
- US-A- 2 056 489
- US-A- 2 612 343

## Description

### Domaine technique

La présente invention se rapporte aux dispositifs utilisés pour remplacer des conduites, par exemple des conduites de gaz ou d'eau se trouvant dans le sol. Il peut s'agir par exemple de tronçons d'adduction d'eau ou de gaz entre un collecteur commun et une desserte individuelle. Il peut s'agir aussi généralement de n'importe quelle conduite enterrée quelle que soit la nature du fluide qui est transporté par la conduite (eau, gaz, air comprimé, hydrocarbures, etc.).

### Contexte et Art Antérieur

Pour remplacer une conduite enterrée, il s'avère préférable d'éviter de procéder à une tranchée d'excavation sur toute la longueur de la conduite en question. Il a déjà été proposé des méthodes où l'on vient fixer par aboutement un tuyau neuf à une extrémité d'un tuyau à remplacer, et où l'on vient tirer le tuyau remplacer pour l'extraire et le substituer progressivement au cours du mouvement de traction par le tuyau neuf. Dans ces conditions, il suffit de procéder à une excavation à chacune des extrémités considérées sans avoir à pratiquer une tranchée entre ces deux excavations.

Lorsque la conduite à remplacer n'est pas elle-même insérée dans une gaine, la conduite à remplacer étant prise dans le sol directement, il faut alors exercer un effort assez important pour tirer conduite à remplacer et la conduite neuve à sa suite.

Le document JP 10196279 enseigne une telle méthode et un appareillage permettant de tracter la conduite à remplacer. Toutefois, dans ce document, il est nécessaire d'utiliser un cadre lourd et encombrant.

Le document US2056489A divulgue un ensemble formant un dispositif de tirage pour tracter une conduite à remplacer.

Il subsiste donc un besoin de proposer un dispositif plus facile à mettre en oeuvre.

### Résumé de l'invention

A cet effet, il est proposé un ensemble formant dispositif de tirage pour tracter une conduite à remplacer (par exemple un tuyau de gaz ou un tuyau d'eau), l'ensemble comprenant :
- une jambe d'appui (1), pour prendre appui sur une cavité dans le sol, la jambe d'appui comprenant un premier élément (11) et un deuxième élément (12), le deuxième élément étant monté coulissant par rapport au premier élément avec un mécanisme de verrouillage de la position du deuxième élément par rapport au premier élément, la jambe d'appui comprenant en outre un premier et un deuxième pieds (21,22), la jambe d'appui comprenant en outre un troisième élément à tourner (13) pour ajuster la longueur de la jambe d'appui selon un axe longitudinal (X1),
- un bras de manoeuvre (3) configuré pour prendre appui sur la jambe d'appui,
- un système d'attache (5) relié au bras de manoeuvre, le système d'attache comprenant un organe de traction configuré pour interfacer la conduite à remplacer.

Grâce à ces dispositions, il est possible d'ajuster la longueur de la jambe d'appui en fonction de la taille de la cavité (i.e. la fouille / le regard) de manière à ce que la jambe d'appui porte fermement ses deux extrémités longitudinales (c'est-à-dire grâce à ses pieds, c'est-à-dire à ses extrémités selon le sens de la traction de la conduite à remplacer) et le bras de manoeuvre, étant interfacé ou articulé sur cette base solide, peut être utilisé de manière fiable et sécurisée pour tracter avec force la conduite à remplacer.

Avantageusement, il est prévu d'une part un ajustement grossier en longueur grâce au mécanisme de verrouillage du coulissement et d'autre part un réglage fin en longueur grâce au troisième élément à tourner, ou à visser. Le réglage en longueur grâce au troisième élément à visser permet de mettre la jambe d'appui en contrainte de compression axiale. En pratique, cet effort de contrainte axial s'exerce le long de l'axe longitudinal via les pieds sur les parois de la fouille (/du regard). De cette manière, la jambe d'appui est solidement ancrée par rapport au sol et peut encaisser des couples provenant de la manoeuvre du bras de manoeuvre.

Grâce à l'appareillage ainsi proposé, on tire la conduite à remplacer et on obtient comme résultat une substitution en lieu et place de l'ancienne conduite par une conduite neuve. Ceci fonctionne même si les diamètres respectifs de l'ancienne conduite et de la nouvelle conduite ne sont pas rigoureusement identiques.

Il faut noter que les pieds peuvent être des pieds intégrés ou des pieds détachables. Ces pieds procurent une surface d'appui substantielle, plus large que la section des premier et deuxième éléments de la jambe d'appui.

En outre, le dispositif de tirage forme un ensemble constitué de pièces démontables, qui peut être placé dans un conteneur facilement transportable. On peut parler d'un kit à monter et à démonter.

Dans divers modes de réalisation de l'invention, on peut éventuellement avoir recours en outre à l'une et/ou à l'autre des dispositions suivantes, prises isolément ou en combinaison.

Selon un aspect, il est prévu une pluralité de positions et/ou des crans de verrouillage entre le premier élément (11) et le deuxième élément (12). Autrement dit, il est formé des positions de verrouillage discrètes, à intervalles réguliers en distance ; dans un exemple on prévoit une cheville ou broche à insérer dans des trous appartenant respectivement au premier élément et au deuxième élément. Ainsi, on fournit un premier ajustement, grossier, de la longueur et un moyen de verrouillage très simple. De plus la solution par trous et broche insérée est très robuste et peut supporter des efforts de compression élevés sans bouger.

Selon un aspect, le troisième élément à tourner est un élément à visser (13). Moyennant quoi on peut exercer un effort important dans l'axe de la jambe d'appui tout en ayant un effort minime à appliquer sur l'élément à visser.

Selon un aspect, le troisième élément à visser (13) peut être formé comme un écrou coopérant avec une tige filetée. Par exemple, la tige filetée peut être attachée à un pied, par exemple le pied arrière, et le vissage l'écrou permet d'éloigner le pied arrière du deuxième élément de la jambe d'appui. Une telle tige filetée et un écrou par exemple un écrou papillon ou avec des branches de manoeuvre s'avère une solution particulièrement économique.

Selon un aspect, l'ensemble comprend une ou deux semelles d'appui. Ces semelles peuvent présenter une surface d'appui plus large que les pieds proprement dits. On peut notamment utiliser de telles semelles dans le cas d'un sol meuble à l'endroit de la fouille du regard.

Selon un aspect avantageux, le bras de manoeuvre est monté à rotation sur la jambe sur un axe Y3. Il s'agit avantageusement d'un montage simple et robuste, qui procure une manoeuvre intuitive pour l'opérateur pour effectuer la traction.

Selon une option, l'axe Y3 est formé par une goupille de verrouillage, i.e. soit une goupille qui assure aussi le verrouillage de position relative des premier et deuxième éléments, soit une goupille spécifique formant arbre d'axe pour le montage à rotation du bras de manoeuvre. Au lieu d'une goupille, on peut utiliser une cheville ou une clavette ou un boulon.

Selon un aspect optionnel, le bras de manoeuvre est articulé sur la jambe d'appui. On peut en effet utiliser une articulation de type quelconque permettant de donner un effet de levier à la manoeuvre du bras de manoeuvre.

Selon un aspect optionnel, chacun des premier et deuxième éléments est formé comme une tige tubulaire de section générale carrée. Ce type de profilé est disponible à coût très compétitif dans plusieurs dimensions transversales et dans plusieurs longueurs. On peut choisir par exemple un profilé à section générale constante, dans lequel on va percer des trous ou souder des pions comme il sera vu plus loin. L'emboîtement du deuxième élément dans le premier élément fournit naturellement la fonction anti rotation. On note que tout type de glissière peut convenir en alternative aux profilés tubulaires insérés l'un dans l'autre.

Selon un aspect optionnel, on peut aussi choisir une tige tubulaire de section rectangle.

Selon un aspect optionnel, il peut être prévu une série de trous traversant agencés sur au moins un des premier et deuxième éléments. L'espacement entre les trous permet ainsi de définir les positions relatives discrètes entre le deuxième élément de la jambe et le premier élément.

Selon un aspect optionnel, ledit ensemble peut être contenu dans un sac de longueur ne dépassant pas 120 cm, avec les autres dimensions inférieures à 30 cm, et/ou la somme des autres dimensions inférieure à 45 cm. On remarque tout d'abord que les pièces formant l'ensemble proposé peuvent être démontées ou désassemblées ; de plus les pièces ainsi désassemblées forment un kit que l'on peut aisément ranger dans un sac de dimensions raisonnables pour être transporté dans le coffre d'un véhicule particulier ou d'une camionnette de chantier.

Selon un aspect, le système d'attache (5) comprend un mors annulaire d'ancrage et/ou une sangle et/ou un collier tracté asymétriquement. Toutefois, n'importe quel autre organe de traction permettant d'accrocher de manière solide la conduite à remplacer peut convenir.

Selon un aspect, on peut utiliser une sangle que l'on enroule autour de la conduite à remplacer, à l'endroit duquel on forme un noeud de verrouillage, par exemple un noeud dit « Machard français ».

Selon un aspect, le bras de manoeuvre présente une longueur comprise entre 0,9 m et 1,2 m. Ainsi, en considérant que ce bras de manoeuvre est manoeuvré par un opérateur, on peut obtenir un effet de levier de l'ordre de 3 ou 4 voire 5, lorsque l'on manoeuvre le levier par la poignée située à l'extrémité libre opposée à l'extrémité prenant appui sur la jambe d'appui.

Selon un aspect, la distance entre les pieds est réglable et comprise entre 1 m et 2 m. Moyennant quoi, l'appareillage proposé peut convenir à tous les types de fouilles plus ou moins grand selon qu'il est nécessaire qu'un compagnon descende dans la fouille ou pas et selon la profondeur de la fouille également. Bien entendu, le principe peut être appliqué pour des longueurs de jambe d'appui inférieures à 1 m ou supérieures à 2 m.

### Description des figures

D'autres aspects, buts et avantages de l'invention apparaîtront à la lecture de la description suivante d'un mode de réalisation de l'invention, donné à titre d'exemple non limitatif. L'invention sera également mieux comprise en regard des dessins joints sur lesquels :
- la figure 1 représente schématiquement, en vue en coupe d'élévation, un chantier de remplacement d'une conduite à remplacer,
- la figure 2 est analogue à la figure 1 et représente le chantier en vue de dessus schématique,
- la figure 3A représente séparément le premier élément et le deuxième élément de la jambe d'appui,

- la figure 3B représente le premier élément et le deuxième élément de la jambe d'appui, insérés l'un dans l'autre et verrouillés dans une position donnée,
- la figure 4 représente une vue en coupe transversale de la jambe d'appui,
- la figure 5 illustre un second exemple de réalisation avec une variante concernant l'articulation du bras de manoeuvre sur la jambe d'appui,
- la figure 6A illustre un exemple du dispositif sous forme de kit avec son sac de transport
- la figure 6B illustre un exemple du dispositif arrangé dans le sac de transport,
- la figure 7 représente en coupe un principe d'accrochage du système d'attache c'est-à-dire de l'organe de traction sur la conduite à remplacer,
- la figure 8 représente en coupe un autre exemple du système d'attache c'est-à-dire de l'organe de traction sur la conduite à remplacer,
- la figure 9 représente en coupe un autre exemple du système d'attache c'est-à-dire de l'organe de traction sur la conduite à remplacer, utilisant une sangle,
- la figure 10 illustre un exemple de réalisation de l'articulation du bras de manoeuvre sur la jambe d'appui,
- la figure 11 illustre un mode de réalisation supplémentaire du dispositif.
- la figure 12 illustre une variante s'agissant de l'interface entre le bras de manoeuvre et la jambe d'appui.

### Description détaillée

Sur les différentes figures, les mêmes références désignent des éléments identiques ou similaires. Pour des raisons de clarté de l'exposé, certains éléments ne sont pas nécessairement représentés à l'échelle.

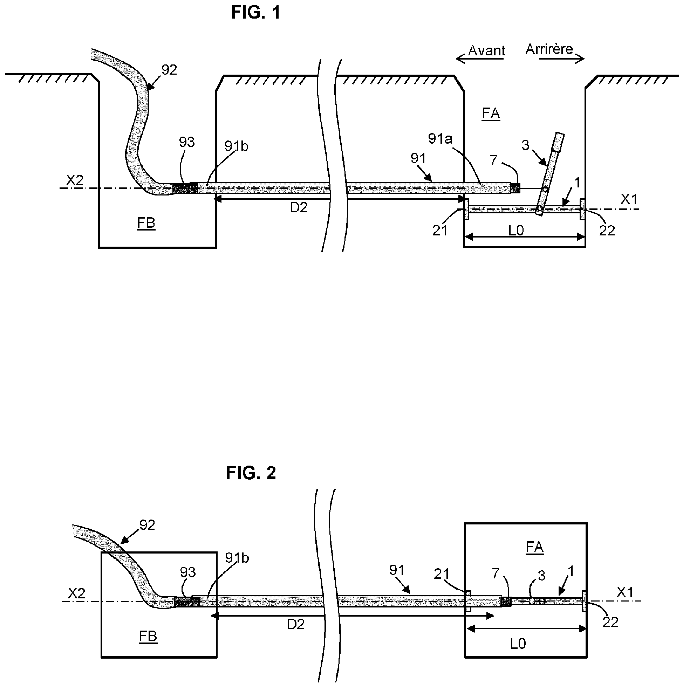

Les figures 1 et 2 représentent schématiquement un chantier dans lequel une conduite est à remplacer. La conduite à remplacer est enterrée, elle est repérée 91. Dans l'exemple illustré, il s'agit d'une conduite ou canalisation tubulaire de section ronde mais l'invention peut être appliquée à tout autre type de tubulure de section différente.

La matière de la canalisation peut être un polymère plastique par exemple en matière de la famille des polyéthylènes, polypropylènes, ABS, PVC, sans exclure toutefois d'autres matériaux conférant une certaine flexibilité à la canalisation.

La canalisation **91** est configurée pour transporter un fluide, liquide ou gazeux. Il peut s'agir entre autres des fluides suivants : eau, gaz, air comprimé, hydrocarbures.

S'agissant de la conduite à remplacer, il peut s'agir par exemple de tronçons d'adduction d'eau ou de gaz entre un collecteur commun et une desserte individuelle, par exemple une armoire de compteur d'une desserte individuelle de bâtiment ou de maison d'habitation.

Afin de préparer le remplacement de la section de conduite à remplacer, on prépare une portion de conduite neuve repérée **92.**

On prévoit aussi une fixation par raboutage **93,** connue dans l'art et donc non décrite en détail ici, elle se présente généralement comme un manchon de raccordement. On note tout de même que la dimension hors tout du dispositif de raboutage n'excède pas substantiellement la section générale de la conduite à remplacer, de manière à pouvoir passer dans l'espace libéré par la conduite à remplacer tractée.

La fixation par raboutage **93** supporte un effort de traction axial relativement important, de manière à pourvoir vaincre les efforts de frottement de la conduite et de l'organe de fixation par raboutage dans le sol.

La portion de conduite à remplacer présente deux extrémités, une première extrémité **91a** que l'on accède au moyen d'une première fouille **FA** ou d'un regard déjà existant. De manière similaire la deuxième extrémité **91b** est accédée au moyen d'une deuxième fouille **FB** ou d'un regard déjà existant.

La distance séparant la première fouille **FA** de la deuxième fouille **FB** est notée **D2** dans l'illustration aux figures 1 et 2. Dans des exemples, la distance **D2** peut aller de moins de 1 m à plusieurs dizaines de mètres. On note aussi que le trajet peut être rectiligne ou courbe. On note également que la profondeur d'enfouissement de la conduite à remplacer peut être quelconque, à savoir quelques dizaines de centimètres jusqu'à plusieurs mètres.

Sur les figures, on a représenté un exemple particulier pour la compréhension de l'invention dans lequel le parcours de la conduite à remplacer est rectiligne et suit un axe noté **X2.**

Ici on tire la conduite depuis la première fouille **FA** mais bien entendu, l'inverse est tout aussi possible.

### Dispositif de tirage

On prévoit l'utilisation dans l'une des fouilles (ici la première) d'un ensemble comprenant une jambe d'appui 1, un bras de manoeuvre **3** configuré pour prendre appui sur la jambe d'appui, et un système d'attache **5** relié au bras de manoeuvre avec un organe de traction **7** configuré pour tracter la conduite à remplacer **91.**

On installe la portion de conduite neuve **92** à la suite de la conduite à remplacer dans l'autre fouille, ici la deuxième. Bien entendu l'inverse est possible.

Par convention, on désigne par la direction « *avant* » dans la fouille de travail, une direction située à l'opposé de l'effort de traction exercé pour extraire la conduite à remplacer. En d'autres termes, la portion *avant* est situé vers la paroi d'où on extrait la conduite et la portion *arrière* est située à l'opposé.

La dimension longitudinale de la première fouille est notée **L0.**

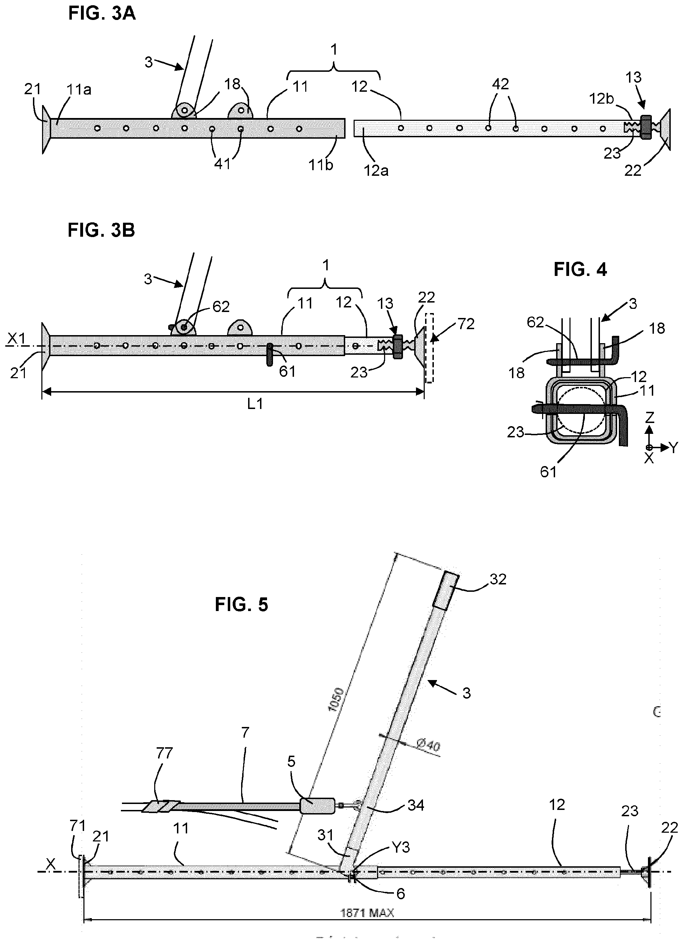

Comme visible aux figures 3A et suivantes, la jambe d'appui **1** comprend un premier élément **11** et un deuxième élément **12.**

Le premier élément s'étend longitudinalement entre une première extrémité dite avant **11a** et une extrémité arrière opposée notée **11b,** tandis que le deuxième élément s'étend longitudinalement entre une première extrémité dite avant **12a** et une extrémité arrière opposée notée **12b.**

Le deuxième élément **12** est monté coulissant par rapport au premier élément **11.**

Dans l'exemple illustré, le deuxième élément est monté coulissant à l'intérieur d'un espace creux du premier élément. Toutefois le montage pourrait être différent avec un rail et un montage côte à côte. Plus largement, tout type de montage à glissières à blocage pourrait aussi convenir.

Dans l'exemple illustré, chacun des premier et deuxième éléments est formé comme une tige tubulaire de section générale carrée. Une section rectangulaire est également possible.

On peut choisir par exemple un profilé à section générale constante. Le profilé s'étend selon un axe principal noté **X1.**

L'emboîtement du deuxième élément 12 dans le premier élément 11 fournit naturellement la fonction anti-rotation autour de **X1.**

Selon un exemple illustré, le premier élément est un profilé tubulaire carré de section de côté 40 mm, d'épaisseur de voile 2 à 3 mm ; Le deuxième élément 12 est un profilé tubulaire carré de section de côté 30 ou 32 mm. Le deuxième élément s'insère dans le premier avec un petit jeu fonctionnel de 2 à 3 mm. En termes de matière, le premier et le deuxième élément peuvent être réalisé en acier peint, en acier galvanisé ou zingué, en alliage d'aluminium, ou tout autre matériau qui présente un ratio résistance versus poids intéressant.

Selon le mode de réalisation représentée aux figures 3A, 3B, 4, 5, il est prévu dans le premier élément une série de trous traversant de part en part, transversalement par rapport à l'axe **X1.** Les trous du premier élément sont repérés collectivement **41.**

De manière similaire, pour le deuxième élément il est prévu une série de trous traversant de part en part, transversalement par rapport à l'axe. Les trous du deuxième élément sont repérés collectivement **42.**

Pour verrouiller la position relative entre le premier élément et le deuxième, on insère une broche qui traverse l'un des trous **41** et l'un des trous **42** comme illustré aux figures.

La distance entre les trous de l'un ou l'autre des éléments de la jambe définit un pas de réglage principal, aussi appelé réglage grossier. Le pas de réglage prédéterminé peut être compris typiquement entre 4 cm et 10 cm.

Plus généralement, il est prévu un avec un mécanisme de verrouillage de la position du deuxième élément par rapport au premier élément qui peut prendre une forme quelconque pour autant qu'il immobilise la position relative des premier et deuxième éléments. Par exemple il peut s'agir de crans de verrouillage entre le premier élément **11** et le deuxième élément **12.** Il peut aussi agir d'un système de pince qui permet de choisir une position relative quelconque sans effet de quantum.

La jambe d'appui comprend en outre un premier pied **21** et un deuxième pied **22.** Les pieds peuvent être des pieds intégrés ou des pieds détachables. Ces pieds procurent une surface d'appui substantielle, plus large que la section des premier et deuxième éléments de la jambe d'appui.

Plus précisément, un premier pied **21** dit 'avant' est agencé à l'extrémité distale du premier élément **11.** Un deuxième pied **22** dit 'arrière' est agencé à l'extrémité distale du deuxième élément **12.** Plus précisément, le deuxième pied est lié à une tige filetée de réglage que l'on détaillera plus loin.

Un pied présente une surface d'appui de plusieurs cm², au moins 50 cm², voire 100 cm², soit plus large que la section du profilé du premier élément ou du deuxième élément.

En complément, il peut être prévu une semelle **71** formée comme une plaque plus large que le pied par exemple de surface au moins 300 cm², voire 400 cm². On placera par exemple la semelle contre le pied **21** avant le réglage fin de la jambe d'appui et sa mise sous prétension.

L'utilisation d'une telle semelle **71** est indiquée si la paroi de la fouille s'avère être du terrain plutôt meuble ou sableux. On augmente ainsi la surface d'appui et on empêche que la jambe d'appui ne pénètre dans la paroi côté avant de la fouille lorsque l'on va tracter la conduite à remplacer. Il peut être prévu une deuxième semelle **72** à positionner entre le pied arrière et la paroi arrière de la fouille.

Outre les deux premiers éléments déjà détaillés, la jambe d'appui comprenant en outre un troisième élément à visser 13 pour ajuster la longueur de la jambe d'appui selon un axe longitudinal **X1.**

Au lieu d'un élément à visser, il peut s'agir de manière plus générale d'un élément à tourner qui agit comme réglage fin de l'extension de la jambe dans le sens longitudinal.

Dans l'exemple illustré ici, il est prévu une tige filetée **23** et un écrou **13.** L'écrou **13** est agencé sur l'extrémité arrière **12b** du deuxième élément, il porte sur cette extrémité et peut y être le cas échéant fixé.

La tige filetée **23** peut être non tournante et l'écrou peut être tournant (écrou avec poignées ou écrou papillon). Toutefois l'inverse est possible c'est-à-dire la tige filetée 23 peut être tournante et l'écrou non tournant. Lorsque l'on visse soit l'écrou soit la tige filetée, le deuxième pied **22** s'éloigne du deuxième élément **12** de la jambe d'appui, ce qui accroît la longueur totale de la jambe d'appui.

Ainsi, en pratique, on augmente la longueur totale de la jambe d'appui **L1** afin de la faire coïncider avec la côte disponible **L0** dans la fouille entre la paroi avant et la paroi arrière.

En alternative, l'élément à visser pourrait se trouver en partie avant de la jambe, voire à la fois en partie avant et en parti arrière.

Comme visible notamment à la figure 4, la tige filetée **23** vient s'insérer à l'intérieur de l'espace creux du profilé du deuxième élément **12.** On peut ainsi avoir une course de réglage assez longue à savoir par exemple un peu supérieure au pas de réglage grossier principal.

### Bras de manoeuvre

Le bras de manoeuvre **3** a pour fonction de produire un effet de levier lorsqu'un opérateur manoeuvre le bras de manoeuvre. En effet, le bras de manoeuvre prend appui, à son extrémité basse **31,** sur la jambe d'appui, alors que l'autre extrémité **32** forme une poignée.

Le bras de manoeuvre peut être articulé, comme illustré aux figures 3A 3B 4, sur deux petits flasques spécifiques **18** fixés sur le premier élément de la jambe d'appui. Dans cette configuration, le réglage principal de la longueur de la jambe se fait grâce à l'insertion de la broche repérée **61,** alors que l'articulation entre le bras de manoeuvre et la jambe d'appui est réalisée indépendamment en insérant la broche repérée **62,** dans des orifices respectifs de l'extrémité basse 31 du bras de manoeuvre et des orifices correspondants des petits flasques **18.**

Dans une autre réalisation illustrée en particulier à la figure 5, le bras de manoeuvre est articulé par rapport à une cheville ou boulon inséré dans une des paires de trous **41, 42** de réglage, que ce soit la cheville déjà utilisée pour verrouiller la position en longueur de la jambe ou une autre cheville placée en sus dans une autre paire de trous.

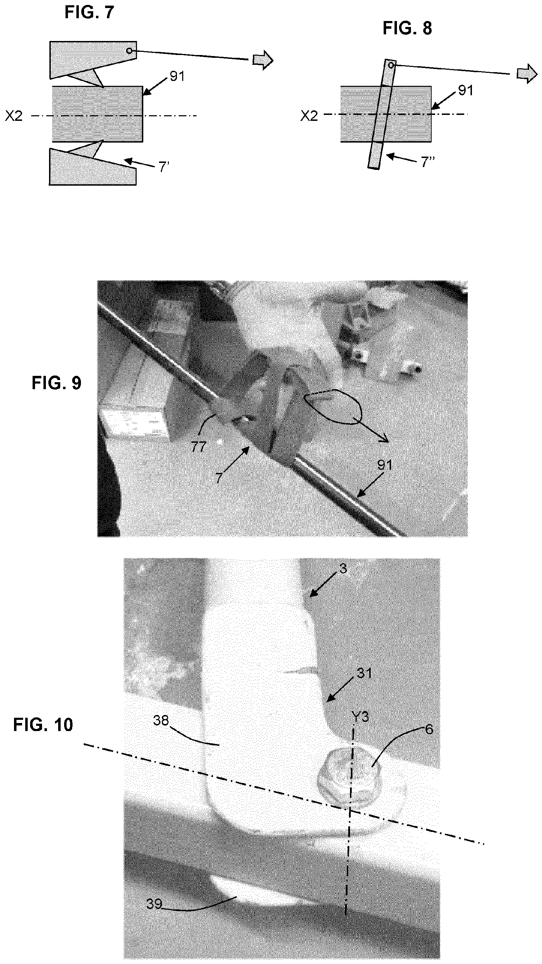

De préférence, comme illustré à la figure 5, on utilise un seul composant, ici un boulon **6,** également visible sur la figure 10, qui réalise à la fois la fonction de verrouillage de la position relative du premier élément et du deuxième élément de la jambe, ainsi que la fonction d'axe d'articulation du bras de manoeuvre sur la jambe d'appui.

Le bras de manoeuvre 3 se présente dans l'exemple illustré comme un profilé tubulaire de section ronde. Le diamètre peut être par exemple de 40 mm. Le bras de manoeuvre est réalisé dans le même matériau que les éléments de la jambe d'appui, de préférence métallique.

Le corps tubulaire est prolongé à l'extrémité basse par deux joues latérales **38, 39** (cf figure 10). Les deux joues latérales sont percées d'orifices dans lequel on insère un axe d'articulation à rotation d'axe **Y3.**

Il est prévu un point de tirage repéré **34** à l'endroit duquel on peut attacher un mousqueton ou un crochet ou un anneau à visser ou un quelconque élément (repéré 5) permettant de tirer sur la conduite à remplacer.

On remarque ainsi que la distance entre la poignée 32 et l'axe d'articulation du bras de manoeuvre est beaucoup plus importante que la distance entre le point d'attache de traction et l'axe d'articulation. Ceci procure un effet d'amplification de l'effort autrement dit un bras de levier. L'ordre de grandeur de l'effet de levier peut être de 4, de 5 ou même plus.

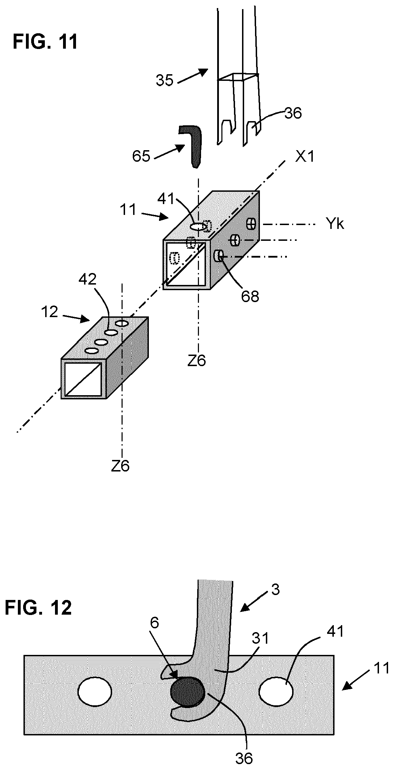

Dans d'autres configurations représentées aux figures 11 et 12, le bras de manoeuvre 3 comprend des formes concaves **36** qui viennent coopérer avec la broche ou avec des pions **68** ménagés sur les parties latérales du premier élément de la jambe d'appui. Ceci peut permettre de changer la position de l'articulation du bras de manoeuvre pendant la procédure de traction de la conduite à remplacer, entre deux courses partielles de traction.

### Système d'attache

S'agissant de l'interface avec le corps de la conduite à remplacer, il est prévu un organe de traction de la conduite à remplacer.

La figure 9 illustre un exemple à base de sangle 7. Ici la sangle est formée comme une boucle refermée sur elle-même comme illustré à la figure 5. La sangle est formée en tissu synthétique flexible latéralement mais très peu extensible dans sa direction longitudinale.

Pour réaliser le noeud dit « Machart français », comme un exemple possible d'interface physique avec la conduite, on aplatit la sangle en double sur elle-même (deux épaisseurs donc) puis on enroule deux ou trois fois la sangle autour de la conduite (cf référence 77 aux figures 5 et 9) à remplacer et puis on passe les extrémités libres de la boucle de sangle l'une à l'intérieur de l'autre.

Suite à quoi, on passe le système d'attache **5** déjà mentionné et relié au point de tirage **34.** La traction sur la boucle de sangle auto verrouille l'enroulement de la sangle autour de la conduite à tracter. À l'inverse, le noeud Machart français, lorsque l'effort de traction est libéré, autorise une avancée de l'enroulement de la sangle le long de la conduite pour un repositionnement plus en avant et une nouvelle traction.

En lieu et place du noeud Machart français on peut faire appel à n'importe quel noeud coulant verrouillable.

On a ainsi un effet de pompage, où on va tracter pas à pas la conduite à remplacer, sans modifier la configuration de la jambe d'appui ni du bras de manoeuvre.

En alternative à la sangle et au noeud coulant verrouillable, on peut utiliser comme illustré schématiquement à la figure 7 un mors annulaire 7'. De même, comme illustré à la figure 8, on peut utiliser un collier de traction 7" ayant un orifice intérieur légèrement plus grand que le diamètre de la conduite à tracter.

### Autres dispositions

Le diamètre de la conduite à remplacer peut être de 20 mm, de 32 mm, ou de tout autre dimension standard ou non standard.

L'ensemble des éléments peut être placé dans un sac **8** transportable.

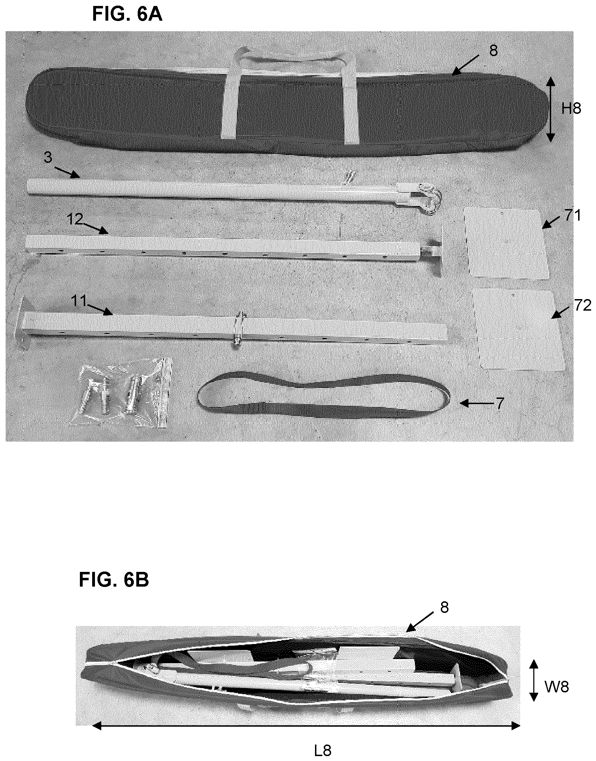

S'agissant des dimensions du sac, la longueur **L8** est comprise entre 110 cm et 120 cm, la largeur du sac **W8** est comprise entre 15 cm et 25 cm, la hauteur du sac **H8** est comprise entre 15 cm et 25 cm. Ainsi, l'ensemble du kit illustré à la figure 5 peut être contenu dans un tel sac transportable 8 représenté à la figure 6A. Un tel sac loge facilement dans le coffre d'une camionnette voire d'un véhicule particulier.

Le poids d'un tel kit peut être avantageusement inférieur à 35 kg, voire inférieur à 30 kg, voire inférieur à 25 kg ce qui permet une manutention aisée.

Sur la figure 11, la broche de verrouillage **65** bloquant la position relative des premiers et deuxième éléments est insérée verticalement, à l'inverse du cas précédent où elle été inséré horizontalement. On note qu'il peut y avoir un seul trou 41 du côté du premier élément de la jambe d'appui, mis en correspondance sélectivement avec l'un de la pluralité des trous **42** agencés sur le deuxième élément. La broche est donc insérée selon l'axe noté **Z6.** Alors que l'articulation du bras de manoeuvre **35** est réalisée par l'accostage des formes concaves **36** des joues latérales avec une paire de pions **68** sur un des axes Yk.

## Revendications

1. Ensemble formant dispositif de tirage pour tracter une conduite à remplacer, l'ensemble comprenant :
- une jambe d'appui (1), pour prendre appui sur une cavité dans le sol, la jambe d'appui comprenant un premier élément (11) et un deuxième élément (12), le deuxième élément étant monté coulissant par rapport au premier élément avec un mécanisme de verrouillage de la position du deuxième élément par rapport au premier élément, la jambe d'appui comprenant en outre un premier et un deuxième pieds (21,22), la jambe d'appui comprenant en outre un troisième élément à tourner (13) pour ajuster la longueur de la jambe d'appui selon un axe longitudinal (X1),
- un bras de manoeuvre (3) configuré pour prendre appui sur la jambe d'appui,
- un système d'attache (5) relié au bras de manoeuvre, le système d'attache comprenant un organe de traction configuré pour interfacer la conduite à remplacer.

2. Ensemble selon la revendication 1, dans lequel il est prévu une pluralité de positions et/ou des crans de verrouillage entre le premier élément (11) et le deuxième élément (12).

3. Ensemble selon l'une des revendications 1 à 2, dans lequel le troisième élément à tourner (13) est formé comme un écrou coopérant avec une tige filetée (23).

4. Ensemble selon l'une des revendications 1 à 3, dans l'ensemble comprend en outre une ou deux semelles d'appui (71,72).

5. Ensemble selon l'une des revendications 1 à 4, dans lequel le bras de manoeuvre est monté à rotation sur la jambe.

6. Ensemble selon l'une des revendications 1 à 5, dans lequel chacun des premier et deuxième éléments est formé comme une tige tubulaire de section générale carrée.

7. Ensemble selon la revendication 6, dans lequel il est prévu une série de trous traversant (41,42) agencés sur au moins un des premier et deuxième éléments (11,12).

8. Ensemble selon l'une des revendications 1 à 7, dans lequel le système d'attache (5) comprend un mors d'ancrage et/ou une sangle comme organe de traction.

9. Ensemble selon l'une des revendications 1 à 8 dans lequel le bras de manoeuvre présente une longueur (L3) comprise entre 0,9 m et 1,2 m.

10. Ensemble selon l'une des revendications 1 à 9, dans lequel la distance (L1) entre les pieds est réglable et comprise entre 1 m et 2 m

## Patentansprüche

1. Anordnung, die eine Ziehvorrichtung zum Schleppen einer auszuwechselnden Rohrleitung ausbildet, die Anordnung umfassend:
- ein Stützbein (1) zum Abstützen auf einem Hohlraum in dem Boden, das Stützbein umfassend ein erstes Element (11) und ein zweites Element (12), wobei das zweite Element bezogen auf das erste Element mit einem Verriegelungsmechanismus der Position des zweiten Elements bezogen auf das erste Element gleitend montiert ist, das Stützbein umfassend ferner einen ersten und einen zweiten Fuß (21, 22), das Stützbein umfassend ferner ein zu drehendes drittes Element (13) zum Anpassen der Länge des Stützbeins entlang einer Längsachse (X1),
- einen Manövrierarm (3), der zum Abstützen auf dem Stützbein konfiguriert ist,
- ein Befestigungssystem (5), das mit dem Manövrierarm verbunden ist, das Befestigungssystem umfassend ein Schlepporgan, das zum Bilden einer Schnittstelle mit der auszuwechselnden Rohrleitung konfiguriert ist.

2. Anordnung nach Anspruch 1, wobei eine Vielzahl von Positionen und/oder Verriegelungsrasten zwischen dem ersten Element (11) und dem zweiten Element (12) vorgesehen ist.

3. Anordnung nach einem der Ansprüche 1 bis 2, wobei das zu drehende dritte Element (13) als eine Mutter ausgebildet ist, die mit einem Gewindestift (23) zusammenwirkt.

4. Anordnung nach einem der Ansprüche 1 bis 3, wobei die Anordnung ferner eine oder zwei Stützflansche (71, 72) umfasst.

5. Anordnung nach einem der Ansprüche 1 bis 4, wobei der Manövrierarm an dem Stützbein drehbar montiert ist.

6. Anordnung nach einem der Ansprüche 1 bis 5, wobei jedes des ersten und des zweiten Elements als ein röhrenartiger Stift mit im Allgemeinen quadratischem Querschnitt ausgebildet ist.

7. Anordnung nach Anspruch 6, wobei eine Reihe von Durchgangsbohrungen (41, 42) vorgesehen ist, die an mindestens einem des ersten und des zweiten Elements (11, 12) eingerichtet sind.

8. Anordnung nach einem der Ansprüche 1 bis 7, wobei das Befestigungssystem (5) eine Verankerungsspannbacke und/oder ein Gurtband als Schlepporgan umfasst.

9. Anordnung nach einem der Ansprüche 1 bis 8, wobei der Manövrierarm eine Länge (L3) zwischen 0,9 m und 1,2 m vorweist.

10. Anordnung nach einem der Ansprüche 1 bis 9, wobei der Abstand (L1) zwischen den Füßen verstellbar und zwischen 1 m und 2 m ist.

## Claims

1. Assembly which forms a pulling device for drawing out a pipe to be replaced, the assembly comprising:
- a bearing (1) for bearing on a cavity in the ground, the bearing leg comprising a first element (11) and a second element (12), the second element being slidably mounted relative to the first element using a mechanism for locking the position of the second element relative to the first element, the bearing leg further comprising a first and a second foot (21, 22), the bearing leg further comprising a third element (13) to be rotated in order to adjust the length of the bearing leg along a longitudinal axis (X1),
- a maneuvering arm (3) which is configured to bear on the bearing leg,
- an attachment system (5) which is connected to the maneuvering arm, the attachment system comprising a drawing-out member which is configured to interface the pipe to be replaced.

2. Assembly according to claim 1, wherein a plurality of positions and/or locking notches are provided between the first element (11) and the second element (12).

3. Assembly according to either claim 1 or claim 2, wherein the third element (13) to be rotated is formed as a nut cooperating with a threaded rod (23).

4. Assembly according to any of claims 1 to 3, wherein the assembly further comprises one or two bearing flanges (71, 72).

5. Assembly according to any of claims 1 to 4, wherein the maneuvering arm is rotatably mounted on the leg.

6. Assembly according to any of claims 1 to 5, wherein each of the first and second elements is formed as a tubular rod having a generally square cross section.

7. Assembly according to claim 6, wherein a series of through-holes (41, 42) arranged on at least one of the first and second elements (11, 12) are provided.

8. Assembly according to any of claims 1 to 7, wherein the attachment system (5) comprises an anchoring jaw and/or a strap as a drawing-out member.

9. Assembly according to any of claims 1 to 8, wherein the maneuvering arm has a length (L3) of between 0.9 m and 1.2 m.

10. Assembly according to any of claims 1 to 9, wherein the distance (L1) between the feet is adjustable and is between 1 m and 2 m.
